# EUROPEAN PATENT APPLICATION

(11) **EP 2 696 567 A1**
(43) Date of publication of application: **12.02.2014**
(21) Application number: 13179176.6
(22) Date of filing: 02.08.2013
(51) Int. Cl.: H04N 1/21, H04N 5/232

(54) **User changing of image capture parameters set by a scene detection algorithm**

(30) Priority: 09.08.2012 KR 20120087250
(71) Applicant: Samsung Electronics Co., Ltd, Gyeonggi-do 443-742 (KR)
(72) Inventor: Yim, Hyun Ock, Seoul (KR); Gwak, Jin Pyo, Seoul (KR); Kim, Seong Woon, Gyeonggi-do (KR); Kim, Ung Sik, Gyeonggi-do (KR)
(74) Representative: Brandon, Paul Laurence

(57) **Abstract**

An image capture apparatus automatically sets an image capture mode based on a subject or surrounding, and a user changes set values of image processing options of the set image capture mode as needed, thereby providing convenience and flexibility. The image capture apparatus includes a scene mode selection unit that analyzes a live view image according to a predetermined scene selection algorithm and selects a scene mode based on the analysis result, a display unit that displays a user interface to select an image processing option related to the selected scene mode and to change a set value of the selected image processing option, and a controller that receives the changed set value of the selected image processing option before an image is captured in the selected scene mode, applies the changed set value to the selected scene mode, and captures the live view image in the selected scene mode.

## Description

### BACKGROUND

### 1. Field

Embodiments of the invention relate to an image capture apparatus and method for obtaining an image of a subject.

### 2. Description of the Related Art

An image capture apparatus, such as a digital camera or a camcorder, supports scene modes in which an image capture mode is automatically set according to the status of a subject or surroundings thereof and an image is captured according to the set image capture mode. In this case, the image capture apparatus has an image processing algorithm for each scene mode such that when one of the scene modes is set, an image is processed according to an algorithm corresponding to the set scene mode. For example, in a portrait mode, the face of a subject is recognized through a function to capture an image of a smiling face. In a sports mode, shutter speed is increased to correctly capture an image of a moving subject.

According to circumstances, on the other hand, a user may be arbitrarily set image capture conditions to capture an image. To this end, the image capture apparatus supports a manual mode. In the manual mode, image capture conditions may be arbitrarily set according to user intention. In the manual mode, however, troublesome processes and much time are required to capture a desired image since most of the image capture conditions are manually set.

### SUMMARY

Various embodiments provide an image capture apparatus and method wherein the image capture apparatus automatically sets an image capture mode based on the status of a subject or surrounding thereof, and a user changes set values of image processing options of the set image capture mode as needed, thereby providing both convenience of an auto mode and flexibility of a manual mode.

Additional embodiments will be set forth in the description which follows and, in part, will become apparent from the description, or may be learned by practicing the embodiments.

In accordance with an embodiment, an image capture apparatus includes a scene mode selection unit that analyzes a live view image according to a predetermined scene selection algorithm and selects a scene mode based on result of the analysis, a display unit that displays a user interface to select an image processing option related to the selected scene mode and to change a set value of the selected image processing option, and a controller that receives the changed set value of the selected image processing option before an image is captured in the selected scene mode, applies the changed set value to the selected scene mode, and captures the live view image in the selected scene mode.

The user interface may include an image processing option selection unit that selects at least one image processing option, and a set value change unit that change a set value of the selected at least one image processing option.

The image processing option selection unit may sequentially display image processing options in response to manipulation of an arrow button.

The image processing option selection unit may scroll through image processing options in response to manipulation of a scroll bar.

The image processing option selection unit may display all image processing options, and one of the image processing options may be selected when the image processing option is touched on the display unit.

The user interface may further include a sample image display unit that displays a sample image corresponding to the changed set value of the selected image processing option.

The user interface may further include a help unit that displays information regarding the selected image processing option.

The user interface may further include a scene mode indication unit that indicates the selected scene mode.

In accordance with another embodiment, an image capture method includes analyzing a live view image according to a predetermined scene selection algorithm, selecting a scene mode based on result of the analysis, displaying a user interface to select an image processing option related to the selected scene mode before an image is captured in the selected scene mode and to change a set value of the selected image processing option on a display unit, receiving the changed set value of the selected image processing option, and applying the changed set value in the scene mode to capture the live view image.

The image capture method may further include receiving an operation mode input selection that changes the set value of the selected image processing option in the selected scene mode.

The image capture method may further include displaying a preview image having the changed set value applied thereto through the display unit.

The changed set value of the selected image processing option may be generated through user manipulation of the user interface.

In accordance with another embodiment, an image capture apparatus includes a scene mode selection unit that analyzes a live view image according to a predetermined scene selection algorithm and selects a scene mode based on result of the analysis, a display unit that displays image processing options related to the selected scene mode and sets values of the image processing options, a manipulation unit that selects one of the image processing options displayed on the display unit and changes the set value of the selected image processing option, and a controller that receives the changed set value of the selected image processing option before an image is captured in the selected scene mode, applies the changed set value to the selected scene mode, and captures the live view image in the selected scene mode.

The manipulation unit may include a vertical arrow key and a horizontal arrow key. The image processing option may be selected through the vertical arrow key or the horizontal arrow key, and the set value of the selected image processing option displayed on the display unit may be changed through the horizontal arrow key or the vertical arrow key.

The manipulation unit may include a command dial and an arrow key. The image processing option may be selected through the command dial, and the set value of the selected image processing option displayed on the display unit may be changed through the arrow key.

The manipulation unit may include a command dial and a wheel. The image processing option may be selected through the command dial, and the set value of the selected image processing option displayed on the display unit may be changed through the wheel.

The user interface may further include a sample image display unit that displays a sample image corresponding to the changed set value of the selected image processing option.

The user interface may further include a help unit that displays information regarding the selected image processing option.

The user interface may further include a scene mode indication unit that indicates the selected scene mode.

In accordance with another embodiment, an image capture apparatus includes a scene mode receiving unit that receives selection of a scene mode, a display unit that displays a user interface including an image processing option selection unit to select at least one image processing option related to the selected scene mode and a set value change unit to change a set value of the selected image processing option, and a controller that receives the changed set value of the selected image processing option before an image is captured in the selected scene mode, applies the changed set value to the selected scene mode, and captures the live view image in the selected scene mode.

The image processing option selection unit may sequentially display image processing options in response to manipulation of an arrow button.

The image processing option selection unit may scroll through image processing options in response to manipulation of a scroll bar.

The image processing option selection unit may display all image processing options, and one of the image processing options may be selected when the image processing option is touched on the display unit.

In accordance with another embodiment, an image capture apparatus includes a manipulation unit that receives selection of a smart manual mode to change a set value of an image processing option related to a scene mode selected by the image capture apparatus, a scene mode selection unit that analyzes a live view image according to a predetermined scene selection algorithm and selects a scene mode from a plurality of scene modes based on result of the analysis, a display unit that displays a user interface including an image processing option selection unit to select at least one image processing option related to the selected scene mode, a set value change unit to change a set value of the selected image processing option, a sample image display unit to display a sample image corresponding to the changed set value of the selected image processing option, and a help unit to display information regarding the selected image processing option, and a controller that receives the changed set value of the selected image processing option before an image is captured in the selected scene mode, displays a preview image having the changed set value applied thereto in the selected scene mode through the display unit, and captures the live view image upon receiving an image capture signal.

The image capture apparatus may further include an operation mode selection unit that allows entry into the smart manual mode.

In accordance with another embodiment, an image capture apparatus includes a scene mode selection unit that analyzes a live view image according to a predetermined scene selection algorithm and selects a scene mode based on the analysis result, a display unit that displays a user interface to batch change a plurality of set values of an image processing option related to the selected scene mode, and a controller that receives the batch changed set values of the selected image processing option before an image is captured in the selected scene mode, applies the changed set values to the selected scene mode, and captures the live view image in the selected scene mode.

The user interface may include an image scene mode selection unit that selects at least one scene mode and a set value change unit that batch changes set values of an image processing option of the selected at least one scene mode.

The scene mode selection unit may sequentially display scene modes in response to manipulation of an arrow button.

The scene mode selection unit may be scroll through scene modes in response to manipulation of a scroll bar.

The scene mode selection unit may display all scene modes, and one of the scene modes may be selected when the scene mode is touched on the display unit.

The user interface may further include a sample image display unit that displays a sample image corresponding to the batch changed set values of the image processing option of the selected scene mode.

The user interface may further include a help unit that displays information regarding the selected scene mode.

The user interface may further include a scene mode indication unit that indicates the selected scene mode.

In accordance with a further embodiment, an image capture apparatus includes a scene mode receiving unit that receives selection of a scene mode, a display unit that displays a user interface to batch change a plurality of set values of at least one image processing option related to the selected scene mode, and a controller that receives the batch changed set values of the selected image processing option before an image is captured in the selected scene mode, applies the changed set values to the selected scene mode, and captures a live view image in the selected scene mode.

The user interface may further include a scene mode selection unit that sequentially displays scene modes in response to manipulation of an arrow button.

The user interface may further include a scene mode selection unit that scrolls through scene modes in response to manipulation of a scroll bar.

The user interface may further include a scene mode selection unit that displays all scene modes, and one of the scene modes is selected when the scene mode is touched on the display unit.

### BRIEF DESCRIPTION OF THE DRAWINGS

These and/or other aspects will become apparent and more readily appreciated from the following description of the embodiments, taken in conjunction with the accompanying drawings of which:
FIG. 1 is a diagram showing an image capture apparatus, according to an embodiment;
FIG. 2 is a diagram showing a control system of the image capture apparatus shown in FIG. 1;
FIG. 3 is a diagram showing an embodiment of a digital signal processor of the image capture apparatus shown in FIG. 2;
FIG. 4 is a flowchart showing an image capture control method, according to an embodiment;
FIG. 5 is a diagram showing another embodiment of the digital signal processor of the image capture apparatus shown in FIG. 2;
FIG. 6 is a flowchart showing an image capture control method, according to another embodiment;
FIG. 7 is a diagram showing the composition of a user interface of an image capture apparatus, according to an embodiment;
FIGS. 8(A) and 8(B) are diagrams showing a help display screen of the user interface shown in FIG. 7, according to the embodiment;
FIGS. 9(A) and 9(B) are diagrams showing an embodiment of a set value change unit of the user interface shown in FIG. 7;
FIGS. 10(A), 10(B), and 10(C) are diagrams showing an embodiment of an image processing option selection unit of the user interface shown in FIG. 7;
FIG. 11 is a diagram showing another embodiment of an image processing option selection unit of the user interface shown in FIG. 7;
FIG. 12 is a diagram showing another embodiment of an image processing option selection unit of the user interface shown in FIG. 7;
FIG. 13 is a diagram showing another embodiment of an image processing option selection unit of the user interface shown in FIG. 7;
FIG. 14 is a diagram showing another embodiment of an image processing option selection unit of the user interface shown in FIG. 7;
FIG. 15 is a diagram showing a further embodiment of an image processing option selection unit and a set value change unit of the user interface shown in FIG. 7; and
FIGS. 16(A), 16(B), and 16(C) are diagrams showing the composition of a user interface of an image capture apparatus, according to another embodiment.

### DETAILED DESCRIPTION

Reference will now be made in detail to the embodiments, examples of which are illustrated in the accompanying drawings, wherein like reference numerals refer to like elements throughout.

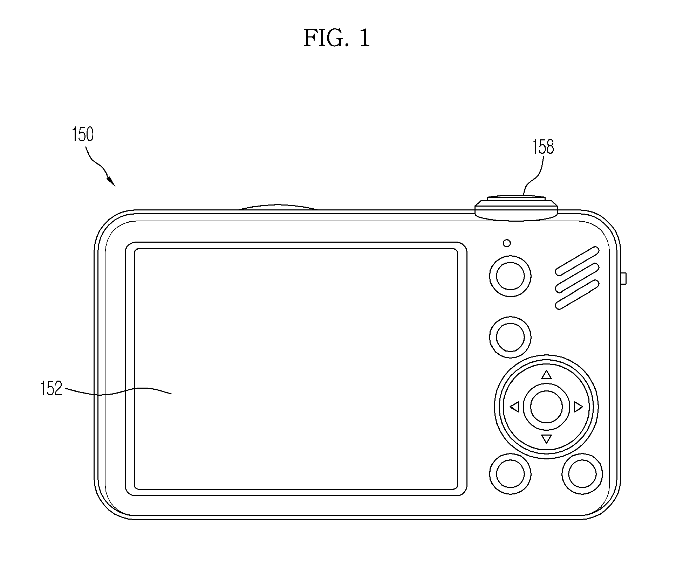

FIG. 1 is a diagram showing an image capture apparatus 150, according to an embodiment.
FIG. 1 illustrates a digital camera as an example of an image capture apparatus 150, which captures images of a subject, converts the images into digital data, and records the digital data in a storage device. However, embodiments are not limited to the digital camera as shown in FIG. 1 and may be applied to other image capture apparatuses, such as a camcorder and a mobile communication terminal (with a camera). In addition, embodiments may be applied to a case in which a television or a computer is communicatively connected to an image capture apparatus via a wired or wireless communication device. An image may be a still image or a moving image. Image capture is an operation of processing images of a subject as data and storing the data. In the image capture apparatus 150 of FIG. 1, a display unit 152 may display an image of a subject input through a lens before the image is captured, and, after the image is captured, may display the captured image. Also, while the image of the subject or the captured image is displayed, a menu and information related to image capture and a user interface that allows a user to set various options may be displayed together with the image. The image capture apparatus 150 also includes a shutter release button 158.

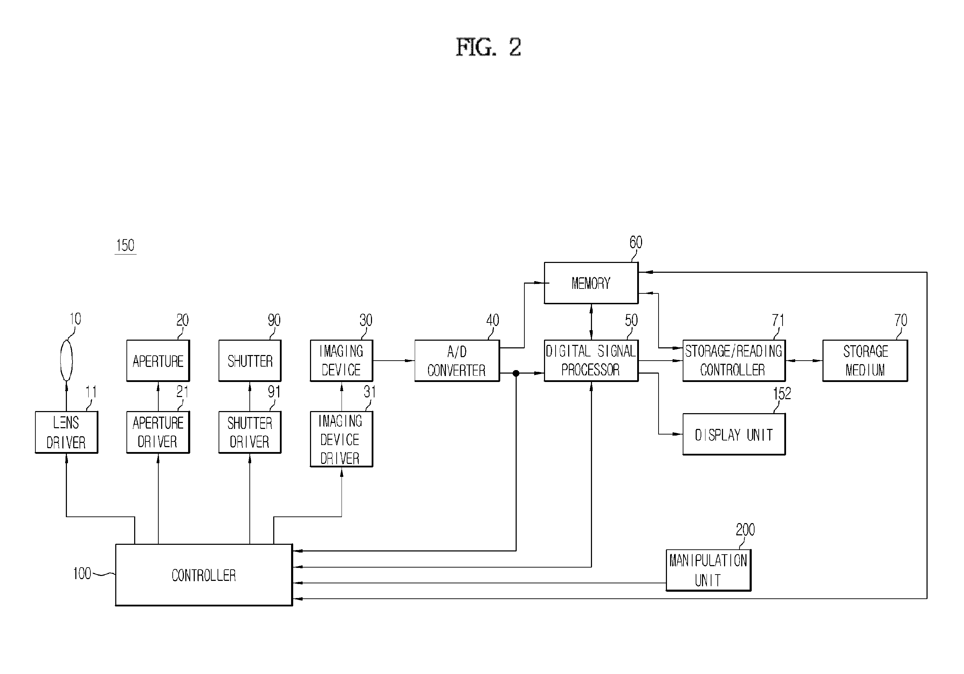

FIG. 2 is a diagram showing a control system of the image capture apparatus 150 shown in FIG. 1. Operation of the image capture apparatus 150 is controlled by a controller 100. In addition, the image capture apparatus 150 includes a manipulation unit 200 to generate a predetermined electric signal in response to user manipulation and to transmit the electric signal to the controller 100 such that the user manipulation is transmitted to the controller 100. The electric signal from the manipulation unit 200 is transmitted to the controller 100 such that the controller 100 controls the image capture apparatus 150 according to the electrical signal. The manipulation unit 200 is different from the user interface of the display unit 152. The user interface of the display unit 152 is a software-based graphical user interface, whereas the manipulation unit 200 is a hardware-based mechanical manipulation unit. The manipulation unit 200 includes an arrow key, a command dial, a wheel, and various buttons.

The controller 100 controls a lens driver 11, an aperture driver 21, a shutter driver 91, and an imaging device driver 31. Consequently, the position of a lens 10, an opening degree of an aperture 20, release of a shutter 90, and the sensitivity of an imaging device 30 are controlled. The imaging device 30 converts an input optical signal into an analog electrical signal. An analog/digital converter 40 converts the analog electrical signal into digital data. Alternatively, the imaging device 30 may perform digital conversion without using the analog/digital converter 40. If an electronic shutter is used instead of the shutter 90, a shutter function is achieved through electronic control of the imaging device 30, the controller 100 may control the imaging device 30 to perform the shutter function.

The image data, generated by the imaging device 30 and converted by the analog/digital converter 40, may be input to a digital signal processor 50 via a memory 60 or directly input to the digital signal processor 50. The image data may also be input to the controller 100 as needed. The memory 60 may include a read only memory (ROM) or a random access memory (RAM). The digital signal processor 50 may perform digital signal processing, such as gamma correction and white balance changes, as needed.

The image data output from the digital signal processor 50 are transmitted to the display unit 152, by which the image data are displayed as an image. In this embodiment, the display unit 152 may be a touchscreen, which is touched to perform a predetermined input operation. The image data output from the digital signal processor 50 are input to a storage/reading controller 71 via the memory 60 or directly input to the storage/reading controller 71. The storage/reading controller 71 stores the image data in a storage medium 70 as an image file according user request or a predetermined automatic storage routine. The storage/reading controller 71 may read data from an image file stored in the storage medium 70 and provides the data to the display unit 152 via the memory 60 or another route such that the display unit 152 displays an image. The storage medium 70 may be detachably mounted in a memory slot or fixedly mounted in the image capture apparatus 150.

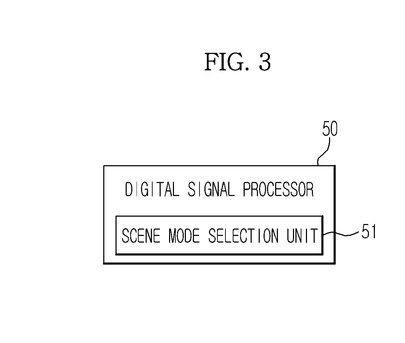

FIG. 3 is a diagram showing an embodiment of the digital signal processor 50 of the image capture apparatus shown in FIG. 2. In particular, the digital signal processor 50 shown in FIG. 3 is configured such that in a <smart manual mode> according to an embodiment, the image capture apparatus 150 determines and selects a scene mode suitable for an image to be captured (for example, a current live view image). Generally, a manual mode is a manual operation mode in which only user intention is reflected, and an auto mode is an automatic operation mode in which the operation is automatically performed according to a programmed processing routine. On the other hand, the <smart manual mode> according to the embodiment is a composite operation mode in which user intention is partially reflected in addition to the programmed processing routine. Using the <smart manual mode>, an image is more easily and conveniently captured than in the manual mode, and an image reflecting user intention is captured, which is generally impossible in the auto mode. For example, in a case in which a scene mode is selected to capture an image, the scene mode is selected by the image capture apparatus 150, and some image processing options related to the selected scene mode may be changed according to user intention. In this case, a scene mode suitable for conditions of a current subject is simply and conveniently selected, and some image processing options of the selected scene mode are changed according to user intention to reflect the user intention, thereby greatly improving user satisfaction.

As shown in FIG. 3, the digital signal processor 50 includes a scene mode selection unit 51. In the <smart manual mode> according to the embodiment, the scene mode selection unit 51 analyzes an image to be captured (for example, a live view image input in real time) according to a predetermined scene selection algorithm and selects a scene mode representing the current live view image based on the analysis result. To this end, the digital signal processor 50 shown in FIG. 3 includes a scene selection algorithm necessary to select various scene modes. The scene mode selection unit 51 transmits information of the selected scene mode to the controller 100 such that an image is captured in the selected scene mode.

Scene modes supported in the <smart manual mode> according to the embodiment are as follows. However, the scene modes are not limited to the following modes, and much more scene modes may be supported to produce various expressions based on user intention.

### <Beauty portrait>

A <beauty portrait> scene mode is a kind of portrait mode based on a facial recognition function. In the <beauty portrait> scene mode, image processing options, such as tone curve, blur, F number, and face color, may be adjusted according to user intention to produce a clear and aesthetically pleasing face image.

### <Sensitive landscape>

A <sensitive landscape> scene mode is a kind of landscape mode to express a sensitive landscape. The <sensitive landscape> scene mode may be selected in a case in which predetermined brightness (10LV under cloudy conditions or 13 to 16LV on a clear day) and a predetermined length (5M or more) are satisfied. In the <sensitive landscape> scene mode, image processing options, such as saturation and sharpness, may be adjusted according to user intention to produce a vivid and aesthetically pleasing landscape image.

### <Romantic sunset>

A <romantic sunset> scene mode is a kind of landscape mode, which may be selected in a case in which red and yellow components of hue information occupy a predetermined portion (about 40% ) at dusk, i.e., at normal brightness (5 to 8LV). 'At dusk' may be determined through time information. In the <romantic sunset> scene mode, image processing options, such as white balance, sharpness, and contrast, may be adjusted according to user intention to produce a romantic sunset image. The white balance may be adjusted to a high color temperature to emphasize sunset light.

### <Mood white>

A <mood white> scene mode may be selected in a case in which color information is 20 to 30% in a condition of about 8LV or more. In the <mood white> scene mode, image processing options, such as saturation and exposure value, may be adjusted according to user intention to produce a mood white image.

### <Mood backlight>

A <mood backlight> scene mode is a kind of backlight mode, which may be selected in a case in which a contrast between a high region and a low region is about 70% based on histogram information included in image data. In the <mood backlight> scene mode, image processing options, such as exposure value and contrast, may be adjusted according to user intention to produce a mood backlight image. When both the exposure value and contrast are increased, a contrast effect between a subject and background is increased while the brightness of the subject is sufficiently secured.

### <Beautiful night>

A <beautiful night> scene mode is a kind of landscape mode, which may be selected at evening, i.e. at normal brightness (about 5LV or less). In the <beautiful night> scene mode, a shutter speed option may be adjusted according to user intention. If the shutter speed is decreased (becomes slower), motion of a moving subject may be expressed. On the other hand, if the shutter speed is increased (becomes faster), an effect due to shake of the image capture apparatus 150 is reduced to obtain a vivid image.

### <Beautiful scenery>

A <beautiful scenery> scene mode is a scene mode including both a portrait and landscape, which may be selected in a case in which a face size of a sensed portrait is less than a predetermined level (about 20% or less of the entire image) while predetermined brightness (10LV under cloudy conditions or 13 to 16LV on a clear day) and a predetermined length (5M or more) are satisfied. In the <beautiful scenery> scene mode, the landscape is more important than the portrait. Consequently, a color option may be adjusted according to user intention to produce a beautiful scenery image.

### <Background blur or Closeup>

A <background blur or closeup> scene mode may be selected in a case in which the distance between the image capture apparatus 150 and a subject is less than a predetermined multiple (for example, 10 times) of the focal distance. In the <background blur or closeup> scene mode, option set values, such as color, sharpness, and F number, may be adjusted according to user intention to produce a background blur or closeup image. If the aperture is opened (i.e. F number is decreased), the depth is decreased to improve a background blur effect. On the other hand, if the aperture is closed (i.e. F number is increased), the depth is increased to vividly express both a short-distance subject and a long-distance subject.

### <Motion>

A <motion> scene mode is a scene mode to capture an image of a moving subject. This scene mode may be selected when motion of the subject is detected. The motion of the subject is detected as follows. An image capture region is divided into a plurality of unit regions, and when variation of brightness information and color information of each unit region exceeds a predetermined critical value, it is determined that there is a moving subject. The moving subject may be a moving person, flowing valley water, water spouting from a fountain, or a running car. In the <motion> scene mode, shutter speed is provided as an option. If the shutter speed is decreased (becomes slower) in the <motion> scene mode, exposure time is increased, and therefore, motion of a moving subject may be expressed as an image (for example, a panning shot of a running car). On the other hand, if the shutter speed is increased (becomes faster) in the <motion> scene mode, water spouting from a fountain may be vividly expressed in an image.

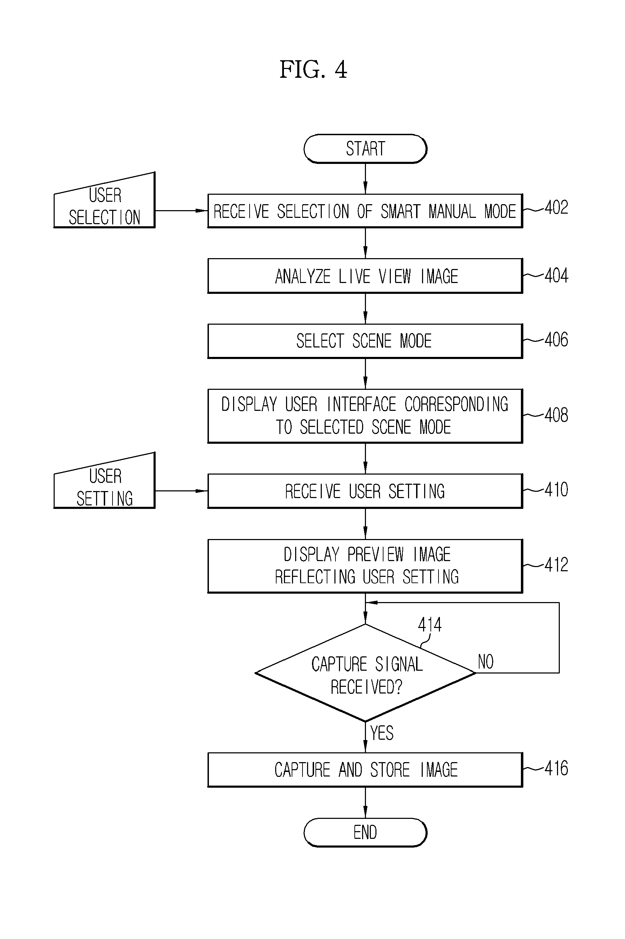

FIG. 4 is a flowchart showing an image capture control method, according to an embodiment. The image capture control method shown in FIG. 4 is performed based on the scene mode selected by the digital signal processor 50 shown in FIG. 3 under control of the controller 100.

As shown in FIG. 4, when a user manipulates the manipulation unit 200 to select a <smart manual mode> in a state in which the image capture apparatus 150 is on, the controller 100 receives the <smart manual mode> selected by the user through the manipulation unit 200 (402). In the <smart manual mode>, the digital signal processor 50 of the image capture apparatus 150 analyzes a current live view image and selects a proper scene mode based on the analysis result.

For selection of the scene mode, first, the digital signal processor 50 analyzes the live view image according to a predetermined scene selection algorithm (404). The controller 100 selects a scene mode most suitable for the current live view image based on the analysis result of the live view image according to the scene selection algorithm (406).

The controller 100 displays a user interface to allow a user to directly change set values of image processing options corresponding to the scene mode selected by the digital signal processor 50 on the display unit 152 (408). The user interface displayed on the display unit 152 may include an image processing option selection unit to select at least one image processing option and a set value change unit to change a set value of the selected image processing option. The user may select an image processing option through the image processing option selection unit displayed on the display unit 152 and change a set value of the one image processing option through the set value change unit displayed on the display unit 152. In another embodiment, an image processing option may be selected and a set value of the image processing option may be changed through a combination of the user interface displayed on the display unit 152 and the manipulation unit 200.

The controller 100 receives user set values (i.e., changed values) through user manipulation of the image processing option selection unit and the set value change unit of the user interface (410). Also, the controller 100 incorporates the received user set values into a current live view image to generate a preview image and displays the preview image on the display unit 152 (412). The user may confirm the resultant image having the user set values reflected therein through the preview image displayed on the display unit 152. When the preview image is desired, the user may manipulate the shutter release button 158 to generate an image capture signal.

When the image capture signal is generated through user manipulation of the shutter release button 158 and is received by the controller 100 (YES of 414), the controller 100 controls the lens 10, the aperture 20, the shutter 90, the imaging device 30, the analog/digital converter 40, and the digital signal processor 50 to capture an image corresponding to the preview image and controls the captured image to be stored in the storage medium 70 (416). Alternatively, the captured image may be transmitted to another apparatus (television or computer) connected to the image capture apparatus 150 through wired or wireless communication. When the image capture signal is not received at operation 414 (NO of 414), the preview image remains displayed for a predetermined period of time.

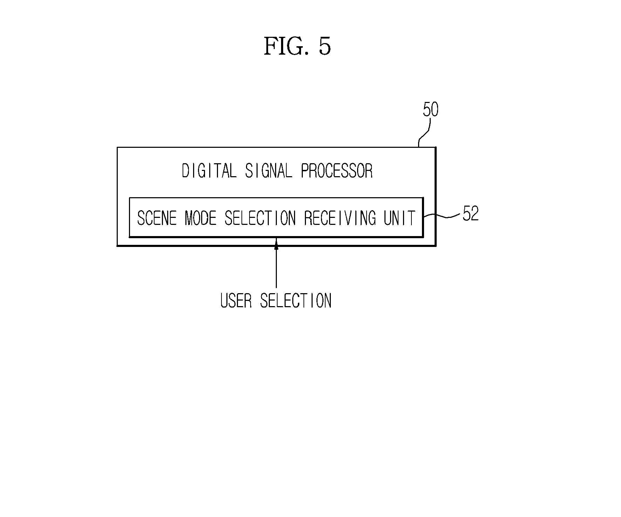

FIG. 5 is a diagram showing another embodiment of the digital signal processor 50 of the image capture apparatus shown in FIG. 2. In particular, the digital signal processor 50 shown in FIG. 5 is configured such that a user directly selects a scene mode. In this case, the user may select a desired scene mode while viewing a scene mode menu displayed on the display unit 152 or rotate a dial provided at the manipulation unit 200 to select a desired scene mode. When the user selects a scene mode, a recommended scene mode may be displayed on the display unit 152. Scene modes selectable by the user may include <beauty portrait>, <sensitive landscape>, <romantic sunset>, <mood white>, <mood backlight>, <beautiful night>, <beautiful scenery>, <background blur or closeup>, and <motion> scene modes as previously described with reference to FIG. 3. Scene modes supported in this embodiment are not limited to the above modes, and much more scene modes may be supported to produce various expressions based on user intention.

As shown in FIG. 5, the digital signal processor 50 includes a scene mode selection receiving unit 52. The scene mode selection receiving unit 52 receives a scene mode selection signal generated when the user manipulates the menu of the display unit 152 or the manipulation unit 200 to select a scene mode in a <manual mode>. The scene mode selection receiving unit 52 then transmits the signal to the digital signal processor 50 such that the digital signal processor 50 recognizes the scene mode selected by the user.

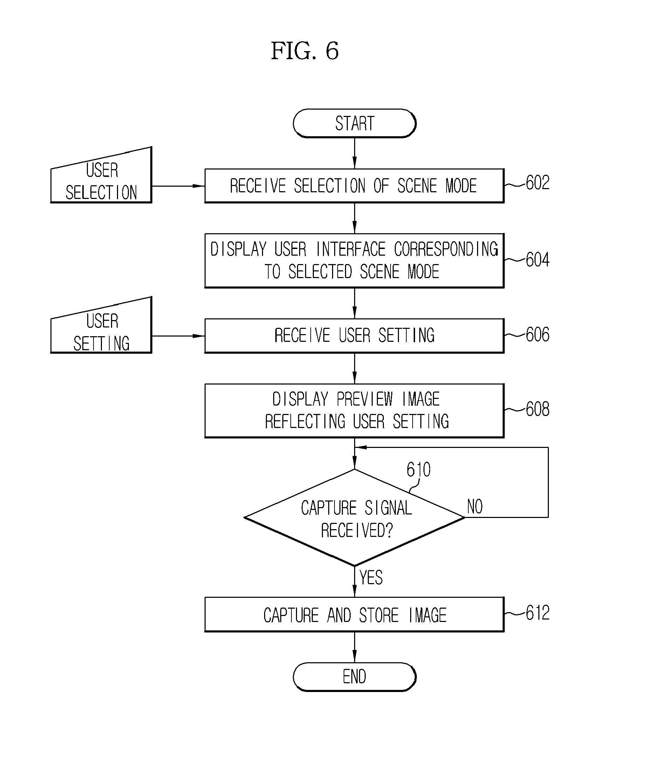

FIG. 6 is a flowchart showing an image capture control method, according to another embodiment. The image capture control method shown in FIG. 6 is performed based on the scene mode selected by the user shown in FIG. 5 under control of the controller 100.

As shown in FIG. 6, when a user manipulates the user interface of the display unit 152 or the manipulation unit 200 to select a desired scene mode in a state in which the image capture apparatus 150 is on, the controller 100 receives the scene mode selected by the user through the manipulation unit 200 (602). Scene modes directly selectable by the user are the same as what has been described with reference to FIG. 3.

The controller 100 displays a user interface to allow a user to directly change set values of image processing options corresponding to the scene mode selected by the user on the display unit 152 (604). The user interface displayed on the display unit 152 may include an image processing option selection unit to select at least one image processing option and a set value change unit to change a set value of the at least one image processing option. The user may select an image processing option through the image processing option selection unit displayed on the display unit 152 and change a set value of the one image processing option through the set value change unit displayed on the display unit 152. In another embodiment, an image processing option may be selected and a set value of the image processing option may be changed through a combination of the user interface displayed on the display unit 152 and the manipulation unit 200.

The controller 100 receives user set values (i.e., changed values) through user manipulation of the image processing option selection unit and the set value change unit of the user interface (606). Also, the controller 100 incorporates the received user set values into a current live view image to generate a preview image and displays the preview image on the display unit 152 (608). The user may confirm the resultant image having the user set values reflected therein through the preview image displayed on the display unit 152. When the preview image is desired, the user may manipulate the shutter release button 158 to generate an image capture signal.

When the image capture signal is generated through user manipulation of the shutter release button 158 and is received by the controller 100 (YES of 610), the controller 100 controls the lens 10, the aperture 20, the shutter 90, the imaging device 30, the analog/digital converter 40, and the digital signal processor 50 to capture an image corresponding to the preview image and controls the captured image to be stored in the storage medium 70 (612). Alternatively, the captured image may be transmitted to another apparatus (television or computer) connected to the image capture apparatus 150 through wired or wireless communication. When the image capture signal is not received at operation 610 (NO of 610), the preview image remains displayed for a predetermined period of time.

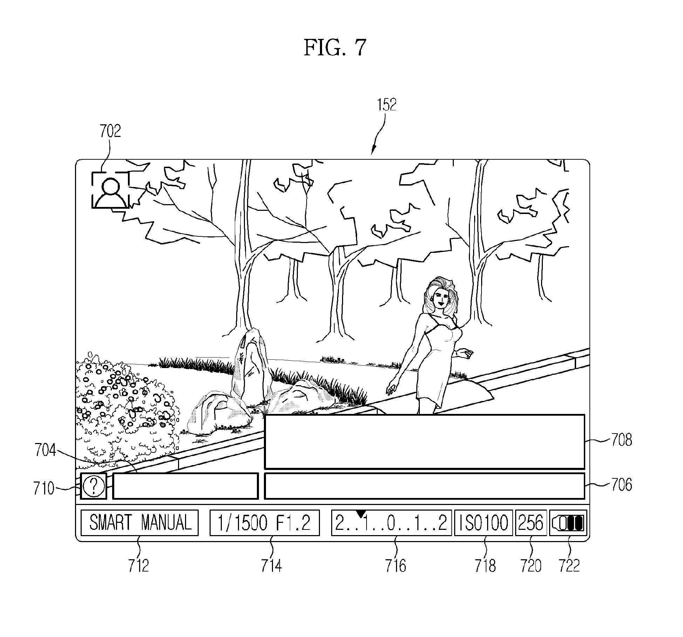

FIG. 7 is a diagram showing the composition of a user interface of an image capture apparatus, according to an embodiment. In the user interface shown in FIG. 7, a scene mode indication unit 702 disposed on the left upper end of the display unit 152 is an icon that indicates a currently selected scene mode. The scene mode indication unit 702 indicates a scene mode selected by the scene mode selection unit 51 based on the analysis result of the live view image according to the scene selection algorithm as mentioned with reference to FIG. 4 or a scene mode selected by the user as mentioned with reference to FIG. 6.

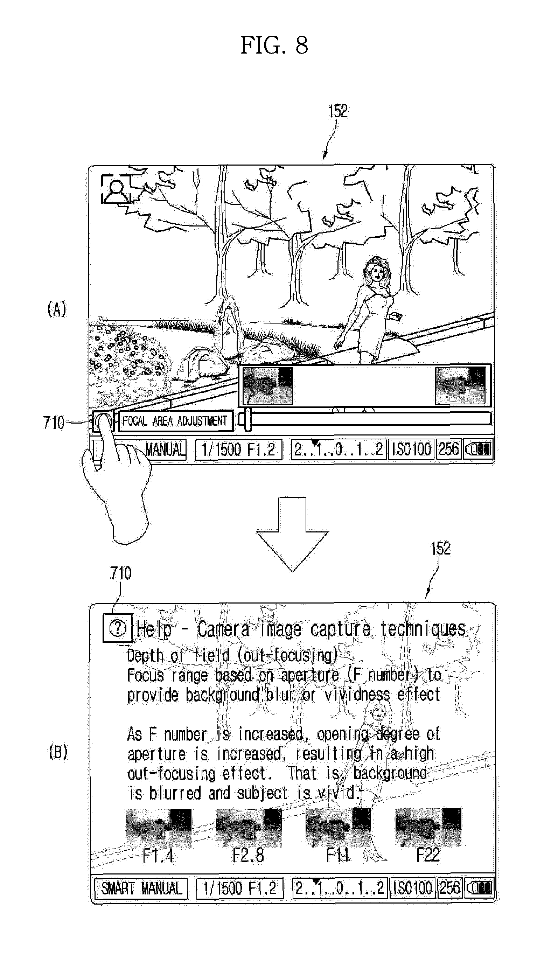

Also, the user interface shown in FIG. 7 includes an image processing option selection unit 704, a set value change unit 706, a sample image display unit 708, and a help unit 710. The image processing option selection unit 704 and the set value change unit 706 are provided to select image processing options of the selected scene mode and to change set values of the selected image processing options. That is, when image processing options are present, a list of image processing options that are selectable through the image processing option selection unit 704 is displayed such that the user selects one of the image processing options (a plurality of image processing options is present). Set values of the image processing options may be changed by a user in a currently selected scene mode. For example, the set value change unit 706 may allow the user to change a set value of the selected image processing option. The sample image display unit 708 displays a sample image conceptually showing how the resultant image, which is obtained by changing the set value of the image processing option, is changed. For example, if a currently selected image processing option is <focal area adjustment>, a sample image, in which the focal area (or depth of field) is changed according to the change in opening degree of the aperture (F number), is displayed on the sample image display unit 708 such that the user easily recognizes the concept of the focal area adjustment. As an example of an image processing effect using the change of the focal area (or depth of field) for a portrait picture, a portrait is brought into focus, and the depth of field is decreased to blur a background and to vividly express the portrait. For a landscape picture, on the other hand, the depth of field is increased to vividly express both a foreground and background. A preview image having the changed set value of the image processing option reflected thereinto is displayed on the remaining display region of the display unit 152 (i.e., excluding the user interface display region) to show how a live view image to be captured is changed according to the change of the set value of the image processing option. The help unit 710 is provided to display information regarding the currently selected image processing option (see FIG. 8 which will be hereinafter described).

Also, in the user interface shown in FIG. 7, an operation mode selection unit 712 allows a user to select from various operation modes of the image capture apparatus 150. In FIG. 7, the operation mode selection unit 712 is provided for entry into the <smart manual mode> according to the embodiment.

Also, the user interface shown in FIG. 7 includes an exposure indication unit 714, an exposure value shift indication unit 716, a sensitivity indication unit 718, a storage medium capacity indication unit 720, and a remaining battery power indication unit 722. The exposure indication unit 714 indicates shutter speed and an aperture number. The exposure indication unit 714 of FIG. 7 indicates a shutter speed of 1/1500 and an aperture number of F1.2. The exposure value shift indication unit 716 indicates an exposure value shift. In the exposure value shift indication unit 716 of FIG. 7, the right side from the middle (0) indicates a positive value shift (exposure increase), and the left side from the middle (0) indicates a negative value shift (exposure decrease). The current indicator is located around 1. The sensitivity indication unit 718 indicates the currently set sensitivity (normally referred to as an ISO value) of the imaging device. The sensitivity of the imaging device means a response degree of the imaging device to light. As the ISO value is increased, the sensitivity of the imaging device to light is increased. On the other hand, as the ISO value is decreased, the sensitivity of the imaging device to light is decreased. In an environment having insufficient quantity of light, such as at night or in a dark room, therefore, the ISO value may be increased such that the imaging device is very sensitive to light, thereby compensating for small quantity of light. The storage medium capacity indication unit 720 indicates remaining storage capacity of the storage medium 70. The number of images that can be captured and stored in the current image capture mode is indicated instead of directly indicating the remaining storage capacity. The storage medium capacity indication unit 720 of FIG. 7 indicates that 256 images can be further captured. The remaining battery power indication unit 722 indicates the remaining battery power.

FIGS. 8(A) and 8(B) are diagrams showing a help display screen of the user interface of FIG. 7, according to the embodiment. When a user touches the help unit 710 described with reference to FIG. 7 (FIG. 8(A)), detailed information regarding a corresponding image processing option is displayed on the main display area of the display unit 152 together with a sample image (FIG. 8(B)). FIG. 8(B) shows a help display screen when the image processing option is <focal area adjustment>. When the help unit 710 is touched one more time in a state in which a help message is displayed as shown in FIG. 8(B), the help message is removed and the live view image or the preview image is displayed.

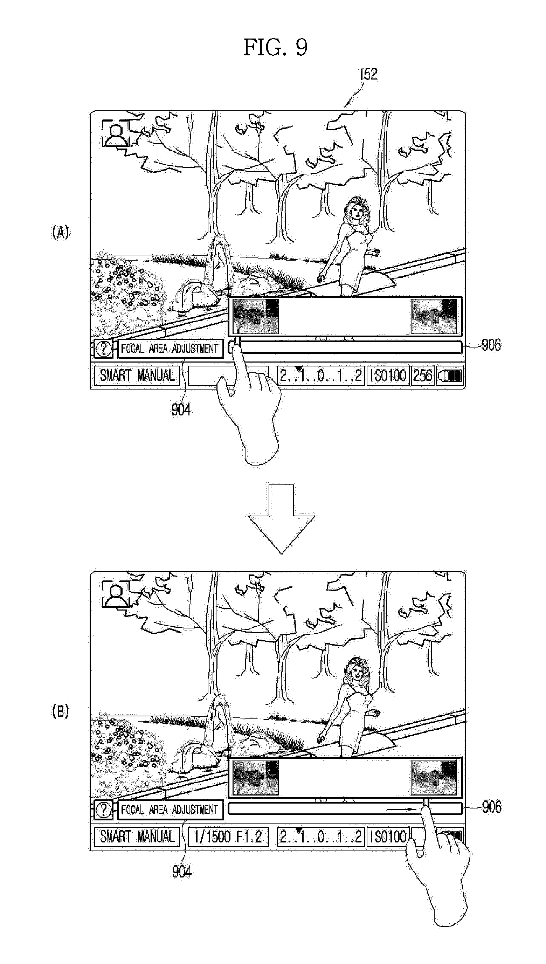

FIGS. 9(A) and 9(B) are diagrams showing an embodiment of a set value change unit of the user interface shown in FIG. 7. As shown in FIGS. 9(A) and 9(B), a set value change unit 906 may be configured in the form of a slide bar. In a state in which a <focal area adjustment> option is selected by an image processing option selection unit 904, a user may move a slide bar of the set value change unit 906 from side to side to change (adjust) the focal area. The form of the set value change unit 906 is not limited to the slide bar. The set value change unit 906 may be configured in other forms in which a user may perform a touch/slide/drag operation on a touchscreen type display screen to change a set value.

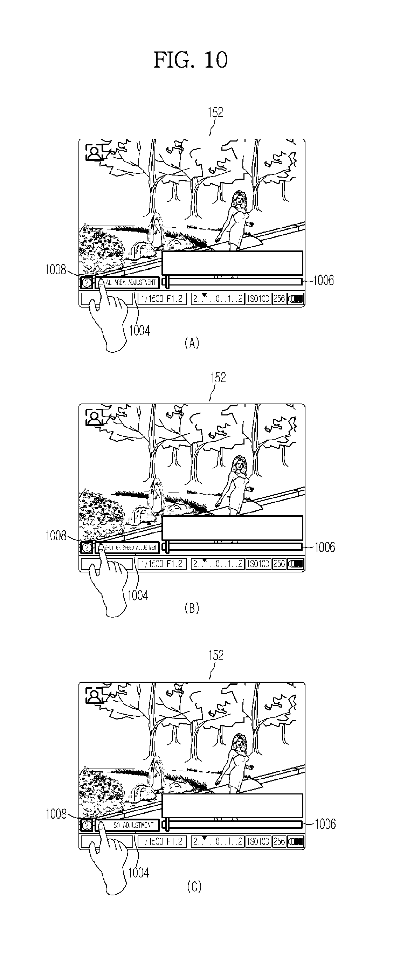

FIGS. 10(A), 10(B), and 10(C) are diagrams showing an embodiment of an image processing option selection unit of the user interface shown in FIG. 7. As shown in FIG. 10, an arrow button 1008 is provided in the user interface to select from (e.g., vertically move) a plurality of image processing options on the display unit 152. When a user touches the arrow button 1008 to select from the image processing options, each image processing option is sequentially displayed in an image processing option selection unit 1004. The arrow button 1008 is a software button, which is graphically displayed on the display unit 152 to respond to user touch. When the user touches an upper triangle or a lower triangle of the arrow button 1008 in a state in which a <focal area adjustment> option is displayed in the image processing option selection unit 1004 as shown in FIG. 10(A), the <focal area adjustment> option displayed in the image processing option selection unit 1004 is changed to a <shutter speed adjustment> option as shown in FIG. 10(B). When the user touches the upper triangle or the lower triangle of the arrow button 1008 one more time, the <shutter speed adjustment> option displayed in the image processing option selection unit 1004 is changed to an <ISO adjustment> option as shown in FIG. 10(C). If the user wishes to change a set value of the <ISO adjustment> option, the user may adjust a slide bar of a set value change unit 1006 in a state in which the <ISO adjustment> option is displayed to adjust an ISO set value. Even in a case in which the number of options selectable in a specific scene mode exceeds 3, the options may be sequentially displayed through user manipulation of the arrow button 1008 such that the user may change a set value of one of the image processing options. If only one image processing option is selectable, the arrow button 1008 may be deactivated. The arrow button 1008 may be disposed horizontally as well as vertically.

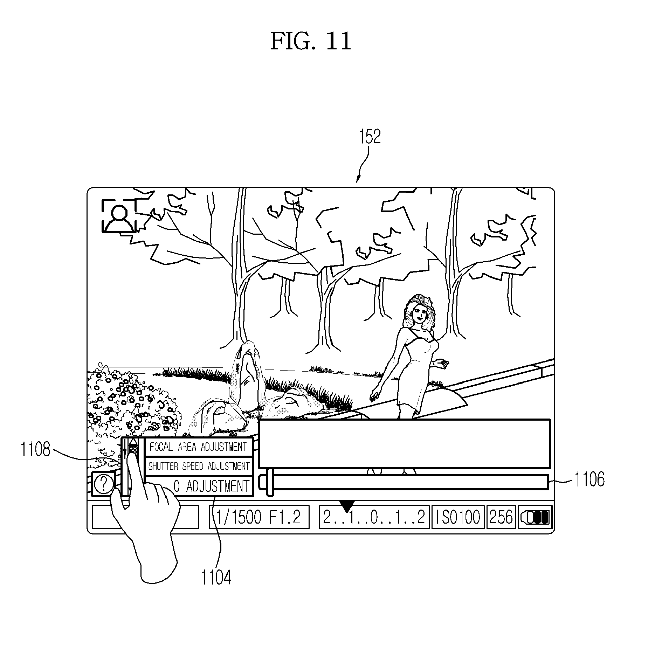

FIG. 11 is a diagram showing another embodiment of an image processing option selection unit of the user interface shown in FIG. 7. As shown in FIG. 11, a scroll bar 1108 is provided in the user interface to vertically scroll through a plurality of image processing options on the display unit 152. When a user vertically scrolls the scroll bar 1108, the image processing options are vertically moved such that the image processing options are displayed in an image processing option selection unit 1104. If the currently selected option is highlighted when the selected option is located at a specific position (for example, the middle of the image processing option selection unit 1104), the selected option may be easily recognized. A set value of currently selected option may be changed. For example, if the user wishes to change a set value of an <ISO adjustment> option, the user may adjust the scroll bar 1108 such that the <ISO adjustment> option is located at a specific position (e.g. the middle of the image processing option selection unit 1104), and adjust a slide bar 1106 to adjust an ISO set value. Even in a case in which the number of options selectable in a specific scene mode exceeds 3, the options may be sequentially displayed through user manipulation of the scroll bar 1108 such that the user may change a set value of one of the image processing options. If only one image processing option is selectable, the scroll bar 1108 may be inactivated.

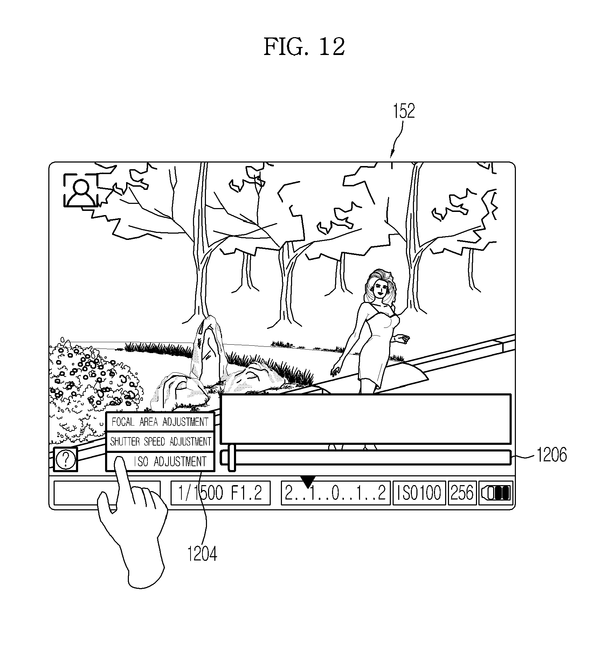

FIG. 12 is a diagram showing another embodiment of an image processing option selection unit of the user interface shown in FIG. 7. As shown in FIG. 12, all image processing options are displayed in an image processing option selection unit 1204 without change in position of the image processing options such that a user may directly touch one of the image processing options to select the touched image processing option (a set value of which is be changed). For example, if the user wishes to change a set value of an <ISO adjustment> option, the user may touch the <ISO adjustment> option in the image processing option selection unit 1204 and adjust a slide bar 1206 to adjust an ISO set value.

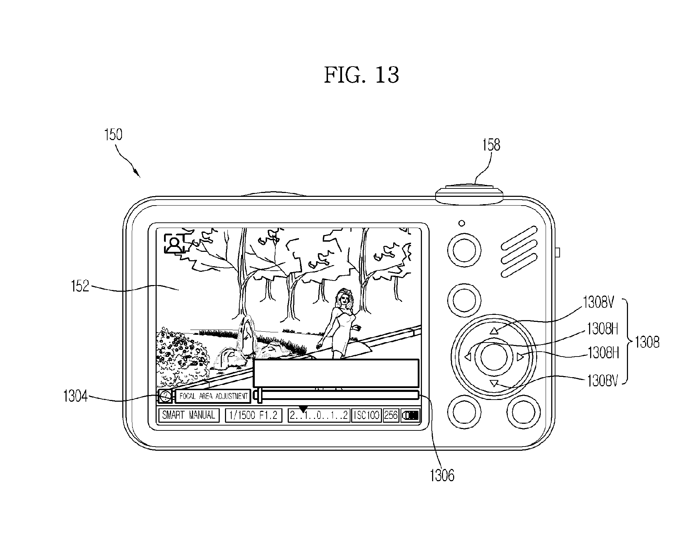

FIG. 13 is a diagram showing another embodiment of an image processing option selection unit of the user interface shown in FIG. 7. As shown in FIG. 13, an arrow key group 1308, which is a component of the manipulation unit 200 of the image processing apparatus 150, is operatively connected to a user interface displayed on the display unit 152 in a graphic form. A user may manipulate the arrow key group 1308 to select an image processing option and to change a set value of the selected image processing option. That is, the user may manipulate vertical arrow keys 1308V of the arrow key group 1308 such that a plurality of image processing options is sequentially displayed in an image processing option selection unit 1304 on the display unit 152. Also, the user may manipulate a slide bar of a set value change unit 1306 on the display unit 152 through horizontal arrow keys 1308H of the arrow key group 1308. In this way, selection of an image processing option and change of a set value of the selected image processing option on the user interface of the display unit 152 may be performed through user manipulation of the arrow key group 1308 provided at the manipulation unit 200. For example, if the user wishes to change a set value of an <ISO adjustment> option, the user may adjust the vertical arrow keys 1308V of the manipulation unit 200 such that the ISO adjustment> option is displayed in the image processing option selection unit 1304 on the user interface of the display unit 152 and then adjust the slide bar of the set value change unit 1306 on the user interface of the display unit 152 through the horizontal arrow keys 1308H of the manipulation unit 200 to change an ISO set value. On the other hand, an image processing option may be selected through the horizontal arrow keys 1308H, and a set value of the selected image processing option may be changed through the vertical arrow keys 1308V. Even in a case in which the number of options selectable in a specific scene mode exceeds 3, the options may be sequentially displayed through user manipulation of the arrow key group 1308 such that the user may change a set value of one of the image processing options.

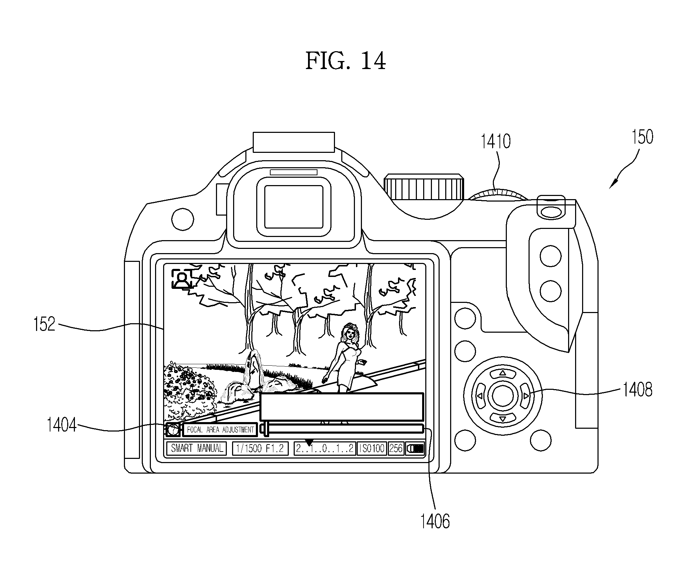

FIG. 14 is a diagram showing another embodiment of an image processing option selection unit of the user interface shown in FIG. 7. As shown in FIG. 14, a command dial 1410, which is a component of the manipulation unit 200 of the image processing apparatus 150, is operatively connected to a user interface displayed on the display unit 152 in a graphic form such that a user selects an image processing option using the command dial 1410. The command dial 1410 is rotatably mounted at the outside of the image capture apparatus 150 (e.g., the upper end of a main body thereof) such that the command dial 1410 may be rotated clockwise or counterclockwise according to user manipulation. The user may rotate the command dial 1410 clockwise or counterclockwise such that a plurality of image processing options is sequentially displayed in an image processing option selection unit 1404. Also, the user may manipulate a slide bar of a set value change unit 1406 of the user interface through arrow keys 1408, which are other components of the manipulation unit 200, to change a set value of the selected image processing option. In a case in which the display unit 152 is a touchscreen, on the other hand, the user may directly manipulate the set value change unit 1406 on the display unit 152 to change a set value of a corresponding image processing option. Even in a case in which a plurality of selectable image processing options is present in a specific scene mode, the image processing options may be sequentially displayed through user manipulation of the command dial 1410 such that the user may select one of the image processing options and change a set value of the selected image processing option.

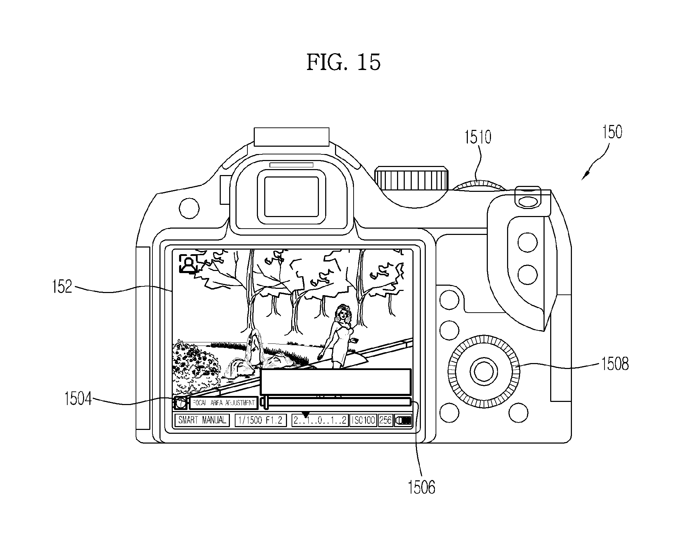

FIG. 15 is a diagram showing a further embodiment of an image processing option selection unit and a set value change unit of the user interface shown in FIG. 7. As shown in FIG. 15, a command dial 1510, which is a component of the manipulation unit 200 of the image processing apparatus 150, is operatively connected to a user interface displayed on the display unit 152 in a graphic form such that a user may select an image processing option using the command dial 1510. Also, a wheel 1508, which is another component of the manipulation unit 200 of the image processing apparatus 150, is operatively connected to the user interface displayed on the display unit 152 in the graphic form such that the user may change a set value of a corresponding image processing option using the wheel 1508. The command dial 1510 is rotatably mounted at the outside of the image capture apparatus 150 (e.g., the upper end of a main body thereof) such that the command dial 1510 may be rotated clockwise or counterclockwise according to user manipulation. The wheel 1508 is rotatably mounted at the outside of the image capture apparatus 150 (e.g., the rear of the main body thereof) such that the wheel 1508 may be rotated clockwise or counterclockwise according to user manipulation. The user may rotate the command dial 1510 clockwise or counterclockwise such that a plurality of image processing options is sequentially displayed in an image processing option selection unit 1504. Also, the user may manipulate a slide bar of a set value change unit 1506 through clockwise or counterclockwise rotation of the wheel 1508 to change a set value of the selected image processing option. Even in a case in which a plurality of selectable image processing options is present in a specific scene mode, the image processing options may be sequentially displayed through user manipulation of the command dial 1510 and the wheel 1508 such that the user may select one of the image processing options and change a set value of the selected image processing option.

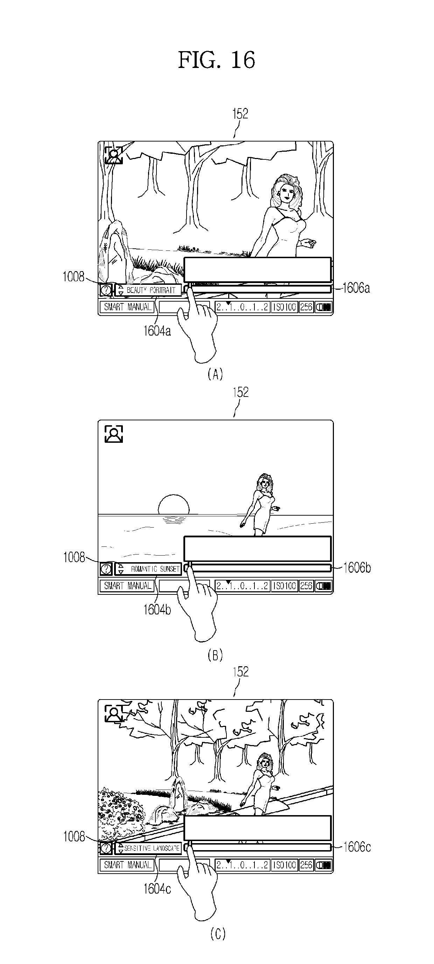

FIGS. 16(A), 16(B), and 16(C) are diagrams showing the composition of a user interface of an image capture apparatus, according to another embodiment. In the embodiments shown in FIGS. 8 to 15, a set value of each image processing option is individually changeable. For example, in the embodiment shown in FIGS. 10(A)-10(C), if a scene mode is selected, a plurality of image processing options changeable in this scene mode is vertically moved such that an image processing option (a set value of which is to be changed) is individually selected, and a set value of the selected image processing option is changed.

In the embodiment shown in FIGS. 16(A)-16(C), if a scene mode is selected, image processing options of the selected scene mode are batch changed through one manipulation. For example, in the scene mode shown in FIGS. 10(A)-10(C), set values of three image processing options, such as focal area adjustment, shutter speed adjustment, and ISO adjustment, are individually changed. In this embodiment, on the other hand, set values of the focal area adjustment, the shutter speed adjustment, and the ISO adjustment are batch changed through a single manipulation of the set value change unit. To this end, a proper range of each image processing options is preset to obtain an image effect in a corresponding scene mode. And an image processing algorithm of each scene mode may be realized such that a set value of each processing option is increased or decreased at a predetermined rate within the proper range through a single manipulation of the set value change unit. For example, when a manipulation equivalent to 20% of the total changeable range (100%) of the set value change unit is performed, an algorithm is realized such that an aperture number is increased by two stops, shutter speed is increased by one stop, and an ISO value is increased by two stops. In this case, all set values of the image processing options of a corresponding scene mode may be batch changed through only one user manipulation of the set value change unit. Consequently, desired image processing options may be more rapidly and conveniently set.

To this end, as shown in FIGS. 16(A)-16(C), scene mode selection units 1604a, 1604b, and 1604c may be provided such that a user directly selects a desired scene mode using the arrow button 1008. Alternatively, as shown in FIGS. 3 and 4, the digital signal processor 50 may analyze an image to be captured (for example, a live view image input in real time) according to a predetermined scene selection algorithm and select a scene mode representing the current live view image based on the analysis result. Also, set value change units 1606a, 1606b, and 1606c may be provided to batch change set values of image processing options of a corresponding scene mode. The embodiments of the image processing option selection units shown in FIGS. 7 to 15 may be directly applied to the scene mode selection units 1604a, 1604b, and 1604c shown in FIG. 16. Also, the embodiments of the set value change units shown in FIGS. 7 to 15 may be directly applied to the set value change units 1606a, 1606b, and 1606c shown in FIG. 16. Also, a help unit to allow a user to request a help message regarding a selected scene mode may be provided as in the help unit 710 shown in FIG. 8.

FIG. 16(A) shows a case in which a <beauty portrait> scene mode is selected. In this scene mode, set values of image processing options, such as tone curve, blur, F number, and face color, may be batch changed through manipulation of the set value change unit 1606a.

FIG. 16(B) shows a case in which a <romantic sunset> scene mode is selected. In this scene mode, set values of image processing options, such as white balance, sharpness, and contrast, may be batch changed through manipulation of the set value change unit 1606b.

FIG. 16(C) shows a case in which a <sensitive landscape> scene mode is selected. In this scene mode, set values of image processing options, such as saturation and sharpness, may be batch changed through manipulation of the set value change unit 1606c.

In addition, <mood white>, <mood backlight>, <beautiful night>, <beautiful scenery>, <background blur or closeup>, and <motion> scene modes supported in the <smart manual mode> according to the embodiments as previously described may be individually selected, and set values of image processing options of the selected scene mode may be batch changed. Embodiments may be applied to other scene modes that are different from the above-mentioned scene modes to batch change set values of image processing options thereof.

In accordance with an embodiment as described above, an image capture apparatus automatically sets an image capture mode based on the status of a subject or surrounding thereof, and a user may change set values of image processing options of the set image capture mode as needed, thereby providing both convenience of an auto mode and flexibility of a manual mode.

Although a few embodiments of the invention have been shown and described, it would be appreciated by those skilled in the art that changes may be made in these embodiments without departing from the principles and spirit of the invention, the scope of which is defined in the claims and their equivalents.

All references, including publications, patent applications, and patents, cited herein are hereby incorporated by reference to the same extent as if each reference were individually and specifically indicated to be incorporated by reference and were set forth in its entirety herein.

For the purposes of promoting an understanding of the principles of the invention, reference has been made to the embodiments illustrated in the drawings, and specific language has been used to describe these embodiments. However, no limitation of the scope of the invention is intended by this specific language, and the invention should be construed to encompass all embodiments that would normally occur to one of ordinary skill in the art. The terminology used herein is for the purpose of describing the particular embodiments and is not intended to be limiting of exemplary embodiments of the invention. In the description of the embodiments, certain detailed explanations of related art are omitted when it is deemed that they may unnecessarily obscure the essence of the invention.

The apparatus described herein may comprise a processor, a memory for storing program data to be executed by the processor, a permanent storage such as a disk drive, a communications port for handling communications with external devices, and user interface devices, including a display, touch panel, keys, buttons, etc. When software modules are involved, these software modules may be stored as program instructions or computer readable code executable by the processor on a non-transitory computer-readable media such as magnetic storage media (e.g., magnetic tapes, hard disks, floppy disks), optical recording media (e.g., CD-ROMs, Digital Versatile Discs (DVDs), etc.), and solid state memory (e.g., random-access memory (RAM), read-only memory (ROM), static random-access memory (SRAM), electrically erasable programmable read-only memory (EEPROM), flash memory, thumb drives, etc.). The computer readable recording media may also be distributed over network coupled computer systems so that the computer readable code is stored and executed in a distributed fashion. This computer readable recording media may be read by the computer, stored in the memory, and executed by the processor.

Also, using the disclosure herein, programmers of ordinary skill in the art to which the invention pertains may easily implement functional programs, codes, and code segments for making and using the invention.

The invention may be described in terms of functional block components and various processing steps. Such functional blocks may be realized by any number of hardware and/or software components configured to perform the specified functions. For example, the invention may employ various integrated circuit components, e.g., memory elements, processing elements, logic elements, look-up tables, and the like, which may carry out a variety of functions under the control of one or more microprocessors or other control devices. Similarly, where the elements of the invention are implemented using software programming or software elements, the invention may be implemented with any programming or scripting language such as C, C++, JAVA®, assembler, or the like, with the various algorithms being implemented with any combination of data structures, objects, processes, routines or other programming elements. Functional aspects may be implemented in algorithms that execute on one or more processors. Furthermore, the invention may employ any number of conventional techniques for electronics configuration, signal processing and/or control, data processing and the like. Finally, the steps of all methods described herein may be performed in any suitable order unless otherwise indicated herein or otherwise clearly contradicted by context.

For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. The words "mechanism", "element", "unit", "structure", "means", and "construction" are used broadly and are not limited to mechanical or physical embodiments, but may include software routines in conjunction with processors, etc.

The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the spirit and scope of the invention as defined by the following claims. Therefore, the scope of the invention is defined not by the detailed description of the invention but by the following claims, and all differences within the scope will be construed as being included in the invention.

No item or component is essential to the practice of the invention unless the element is specifically described as "essential" or "critical". It will also be recognized that the terms "comprises," "comprising," "includes," "including," "has," and "having," as used herein, are specifically intended to be read as open-ended terms of art. The use of the terms "a" and "an" and "the" and similar referents in the context of describing the invention (especially in the context of the following claims) are to be construed to cover both the singular and the plural, unless the context clearly indicates otherwise. In addition, it should be understood that although the terms "first," "second," etc. may be used herein to describe various elements, these elements should not be limited by these terms, which are only used to distinguish one element from another. Furthermore, recitation of ranges of values herein are merely intended to serve as a shorthand method of referring individually to each separate value falling within the range, unless otherwise indicated herein, and each separate value is incorporated into the specification as if it were individually recited herein.

## Claims

1. An image capture apparatus comprising:
a scene mode selection unit that analyzes a live view image according to a predetermined scene selection algorithm and selects a scene mode based on result of the analysis;
a display unit that displays a user interface to select an image processing option related to the selected scene mode and to change a set value of the selected image processing option; and
a controller that receives the changed set value of the selected image processing option before an image is captured in the selected scene mode, applies the changed set value to the selected scene mode, and captures the live view image in the selected scene mode.

2. The image capture apparatus according to claim 1, wherein the user interface comprises:
an image processing option selection unit that selects at least one image processing option;
and
a set value change unit that changes a set value of the selected at least one image processing option.

3. The image capture apparatus according to claim 2, wherein the image processing option selection unit sequentially displays image processing options in response to manipulation of an arrow button.

4. The image capture apparatus according to claim 2, wherein the image processing option selection unit scrolls through image processing options in response to manipulation of a scroll bar.

5. The image capture apparatus according to claim 2, wherein the image processing option selection unit displays all image processing options, and one of the image processing options is selected when the image processing option is touched on the display unit.

6. The image capture apparatus according to claim 1, wherein the user interface further comprises a sample image display unit that displays a sample image corresponding to the changed set value of the selected image processing option.

7. The image capture apparatus according to claim 1, wherein the user interface further comprises a help unit that displays information regarding the selected image processing option.

8. The image capture apparatus according to claim 1, wherein the user interface further comprises a scene mode indication unit that indicates the selected scene mode.

9. An image capture method comprising:
analyzing a live view image according to a predetermined scene selection algorithm;
selecting a scene mode based on result of the analysis;
displaying a user interface to select an image processing option related to the selected scene mode and to change a set value of the selected image processing option on a display unit, before an image is captured in the selected scene mode;
receiving the changed set value of the selected image processing option; and
applying the changed set value in the scene mode to capture the live view image.

10. The image capture method according to claim 9, further comprising receiving an operation mode input selection that changes the set value of the image processing option in the selected scene mode.

11. The image capture method according to claim 9, further comprising displaying a preview image having the changed set value applied thereto through the display unit.

12. The image capture method according to claim 9, wherein the changed set value of the selected image processing option is generated through user manipulation of the user interface.
